# EUROPÄISCHE PATENTSCHRIFT

(11) **EP 0 502 343 B1**
(45) Veröffentlichungstag und Bekanntmachung des Hinweises auf die Patenterteilung: **24.04.1996**
(21) Anmeldenummer: 92102384.2
(22) Anmeldetag: 13.02.1992
(51) Int. Cl.: A22C 11/04

(54) **Portioniervorrichtung**
Apparatus for portioning
Appareil doseur

(30) Priorität: 02.03.1991 DE 9102534 U
(43) Veröffentlichungstag der Anmeldung: 09.09.1992
(73) Patentinhaber: Tetra Laval Convenience Food GmbH & Co. KG, D-35216 Biedenkopf-Wallau (DE)
(72) Erfinder: Schmidt, Karlheinz, Dipl.-Ing., W-3564 Steffenberg-Quotshausen (DE); Sassmannshausen, Volker, Dipl.-Ing., W-5928 Bad Laasphe (DE); Fritz, Karl Ludwig, W-3565 Breidenbach (DE); Schwab, Manfred, W-3565 Breidenbach-Kleingladenbach (DE)
(74) Vertreter: Missling, Arne, Dipl.-Ing.

(56) Entgegenhaltungen:
- DE-A- 1 511 786
- DE-B- 1 292 534
- DE-C- 571 281
- DE-C- 2 725 636
- FR-A- 2 544 171
- GB-A- 10 508
- GB-A- 724 300

## Beschreibung

Die Erfindung betrifft eine Portioniervorrichtung, insbesondere für eine Wurstfüllmaschine, mit einem drehbar gelagerten Verteilerrohr, welches in seinem mittleren Bereich mit einer schräg zu der Längsachse des Verteilerrohres angeordneten Trennwand versehen ist, mit beiderseits der Trennwand jeweils einer Durchströmöffnung in der Wandung des Verteilerrohres, welche gegenüberliegend zu der Trennwand angeordnet ist und jeweils in eine von zwei senkrecht zu der Längsachse des Verteilerrohres in einem das Verteilerrohr aufnehmenden Gehäuse angeordneten Portionierkammern mündet, mit jeweils einem in der jeweiligen Portionierkammer gelagerten Portionierkolben, mit Antriebsmitteln zum gleichzeitigen Bewegen der Portionierkolben und mit Verstellmitteln zum oszillierenden Drehen des Verteilerrohres, wobei die Antriebsmittel zum synchronen Bewegen der Portionierkolben zumindest eine außerhalb der Portionierkammern angeordnete, die beiden Portionierkolben verbindende Zugstange und Mittel zur Hubeinstellung der Portionierkolben umfassen, wobei die Portionierkammer direkt angrenzend an die Durchströmöffnung und zu dieser fluchtend angeordnet ist.

Bei der Herstellung von Wurstwaren ist es erforderlich, die Wurstmasse bzw. das Rohwurstbrät zu portionieren und abzufüllen. Hierbei ergeben sich vielfältige Probleme, da Rohwurstmaterial ein sehr schwer abzufüllendes Gut ist, da die Rohwurstmasse elastische Eigenschaften aufweist, welche sich in Abhängigkeit von der Zusammensetzung der Wurstmasse ändern und da zudem vermieden werden muß, daß die Wurstmasse beim Abfüllen in Därme zu stark komprimiert wird. Dies würde zu einem Verschmieren der einzelnen Fett- und Fleischpartikel führen. Eine derart verschmierte Wurstmasse würde eine ungünstige Reifezeit aufweisen und wäre im Schnittbild, d.h. hinsichtlich der optischen Eigenschaften der fertiggestellten Wurst unattraktiv.

Es ist aus dem Stand der Technik bekannt, Rohwurstmaterial mittels einer Vakuum-Rohwurst-Füllanlage abzufüllen. Hierbei wird das Wurstmaterial in eine Vakuumpresse eingefüllt, um die in dem Wurstmaterial eingeschlossene Luftvolumina zu entfernen. Nachfolgend erfolgt eine Förderung des Wurstmaterials mittels einer Förderschnecke, um das Wurstmaterial in einzelne Zylinder zu füllen. Diese mit dem Wurstmaterial befüllten Zylinder werden nachfolgend an einzelne Abfüllstationen übergeben, in welchen sie mittels eines Füllkolbens entleert werden. Dabei wird das Wurstmaterial durch gesteuerte Bewegung eines Füllkolbens in dem Füllzylinder portioniert in die Därme abgegeben.

Abgesehen von der Notwendigkeit, das Rohwurstmaterial schonend zu behandeln, ergibt sich der Nachteil, daß die Portionierung des Wurstmateriales für die einzelnen Würste nicht so exakt vorgenommen werden kann, wie dies wünschenswert wäre. Es bereitet insbesondere Schwierigkeiten, den Füllkolben in dem Füllzylinder, welcher einen relativ grossen Durchmesser aufweist, so exakt zu bewegen, daß bei jedem Kolbenschub die exakt gleiche Menge an Wurstmaterial abgegeben wird. Insbesondere die Regelung des Antriebs des Füllkolbens unterliegt vielfältigen Störungsparametern, beispielsweise hinsichtlich der Öltemperatur, der Dichteunterschiede im Wurstmaterial sowie von möglichen Leckagen, so daß zur Einhaltung der geforderten Mindestgewichte stets eine gewisse Überfüllung der einzelnen Würste erfolgen muß. Dies ist insbesondere aus wirtschaftlicher Sicht sehr nachteilig.

Aus dem Stand der Technik sind Füll- und Portioniersysteme bekannt, bei welchen das Füllgut über Schnecken, Flügelzellen- und Zahnradpumpen in kleinen Kammern sehr stark verdichtet wird. Hierdurch ist zwar das Portionieren des Wurstmateriales in einfacherer und exakterer Weise möglich, die hierbei auftretende starke Verdichtung des Wurstmateriales führt jedoch zu einer nicht erwünschten Beeinträchtigung des Materiales, so daß derartige Geräte nur in sehr begrenztem Umfang einsetzbar sind.

Aus der DE-Offenlegungsschrift 1 511 786 ist eine Portioniereinrichtung mit einem drehbaren Verteilerrohr bekannt, welches als Schieber dient, um das Wurstmaterial je nach Stellung des Schiebers in einen von zwei Füllzylindern abzugeben. Mittels Kolben, welche sich in den Füllzylindern befinden, kann das Wurstmaterial in dem nächstfolgenden Arbeitsgang aus dem Verteilerrohr ausgestoßen werden, während gleichzeitig der zweite Füllzylinder mit Wurstmaterial gefüllt wird. Nachteilig hierbei ist, daß das Wurstmaterial sehr stark umgelenkt und durch relativ kleine Aus- bzw. Einfüllöffnungen gepreßt werden muß. Dies führt zu einer sehr starken Beanspruchung des Wurstmaterials und bringt die oben beschriebenen Nachteile mit sich.

In der DE-Auslegeschrift 1 292 534 ist in einer ähnlichen Portioniervorrichtung ein drehbares, als Schieber wirkendes Rohrstück vorgesehen, welches mit mehreren Kanälen versehen ist, durch welche das Wurstmaterial wahlweise in die Innenkammer eines Doppelkolbensystems einströmen bzw. aus diesem ausgeleitet werden kann. Auch hierbei erfolgt eine starke Umlenkung des Wurstmaterials bei sich stark ändernden Querschnittsverhältnissen. Auch diese Vorrichtung ist wegen der starken mechanischen Belastung, welche auf das Wurstmaterial wirkt, ungünstig und nur für wenige Materialien brauchbar.

Ein Doppelkolbensystem, bei welchem ein drehbares Rohr wahlweise mit zwei Kammern in Verbindung bringbar ist, ist weiterhin aus der Deutschen Patentschrift 526 678 bekannt. Auch hierbei ist eine mehrfache Umlenkung des Wurstmateriales erforderlich, so daß sich ebenfalls eine sehr starke mechanische Belastung ergibt.

Die DE-Patentschrift 582 111 zeigt ein um die Hochachse drehbares Portionierrohr mit innen liegendem Doppelkolben. Das gesamte, beide Kolbenkammern umfassende Gehäuse ist wahlweise fluchtend zu einem Füllzylinder ausrichtbar. Abgesehen von den hierbei auftretenden Dichtungsproblemen ist eine exakte Portionierung des Wurstmaterials nicht zu erreichen. Zusätzlich wird dieses einer mehrfachen starken Querschnittsänderung unterworfen und hierbei ebenfalls stark mechanisch beeinflußt.

Die Druckschrift DE 27 25 636 C2 beschreibt einen Ringkörper, in welchem exzentrisch ein drehbares Gehäuse gelagert ist. Das Gehäuse umfaßt einen Doppelkolbenmechanismus mit zwei Portionierkammern, wobei die Kolben bei einer Drehung des exzentrisch gelagerten Gehäuses hin- und herbewegt werden. Eine Befüllung bzw. Entleerung der Portionierkammern erfolgt durch ein feststehendes, im Zentrum des Gehäuses gelagertes Füllrohr. Als nachteilig erweist sich bei dieser Anordnung, daß durch die exzentrische Lagerung des Gehäuses zwar zwangsweise der jeweilige Kolben in die Entleerungsposition verschoben wird, daß jedoch beim Füllen ein Rückschieben des Kolbens durch den Druck des Wurstmaterials erfolgen muß. Dieses wird hierbei stark komprimiert und erheblichen mechanischen Beanspruchungen ausgesetzt.

Eine Portioniervorrichtung der eingangs näher bezeichneten Art ist aus der GB-Patentschrift 724,300 bereits bekannt. Bei dieser Anordnung sind die beiden Portionierkolben durch zwei Zugstangen so miteinander verbunden, daß sie nur gemeinsam verschiebbar sind, so daß eine Kompression des Füllgutes nunmehr vermieden wird.

Die Zugstangen sind dabei an beiden Enden mit an den Zugstangen längsverschiebbar befestigten Anschlägen versehen, die den Hub der Portionierkolben gehäuseanschlagend begrenzen, welche mittels je einer Verstellspindel in ihrer Längsachse gegenseitig und jeweils in Bezug auf die Anschläge verstellbar sind Eine solche Anordnung erfordert eine umständliche mehrfache Justierung der Lage der Portionierkolben in Richtung ihrer gemeinsamen Längsachse bereits, wenn ein einziges Portions-Volumen eingerichtet werden soll. Jede Änderung dieses Portions-Volumens verlangt den gleichen Aufwand, der durch erforderliches mehrfaches Probieren bei der Einstellung erheblich und umso größer ist, je genauer portioniert werden soll.

Der Erfindung liegt die Aufgabe zugrunde, eine Portioniervorrichtung der eingangs genannten Art zu schaffen, welche bei einfachem Aufbau und einfacher, betriebssicherer Anwendbarkeit eine exakte Portionierung des Portioniergutes ermöglicht, wobei dieses dabei schonend behandelt und keiner starken mechanischen Beanspruchung ausgesetzt wird, und welche zudem eine rasche und sichere Einstellung und Veränderung des Volumens der Portionen erlaubt.

Diese Aufgabe wird mit den Merkmalen des Anspruches 1 gelöst.

Durch die Erfindung ist es möglich, die Positionierkolben exakt zu steuern und zu bewegen, so daß das jeweils geförderte Portioniergut in Mengen von stets gleichem Volumen bzw. Gewicht portioniert werden kann. Unter Verwendung der erfindungsgemäßen Portioniervorrichtung kann auf eine Überfüllung der einzelnen Würste verzichtet werden.

Ein Vorteil der erfindungsgemäßen Portioniervorrichtung besteht darin, daß diese im wesentlichen unabhängig von der vorgeordneten Abfüllvorrichtung wirkt, so daß die erfindungsgemäße Portioniervorrichtung in Verbindung mit unterschiedlichsten Abfüllvorrichtungen verwendbar ist.

Die erfindungsgemäße Portioniervorrichtung läßt sich schnell und einfach an unterschiedliche Abgabemengen anpassen, so daß komplizierte Einstell- und Umrüstarbeiten gänzlich entfallen können. Der Abstand der beiden Portionierkolben voneinander kann frei eingestellt werden, so daß die Volumina der einzelnen Portionierkammern variabel sind. Dies hat den großen Vorteil, daß bei jedem Füll- bzw. Entleerungsschritt im wesentlichen der gesamte Inhalt der jeweiligen Portionierkammern abgegeben bzw. diese vollständig gefüllt wird. Das Verbleiben von restlichem Portioniergut in den Portionierkammern wird weitgehend vermieden.

Besonders vorteilhaft ist es, wenn der Verstellmotor an der Zugstange längsverschiebbar gelagert und mit einer Verstellspindel betriebsverbunden ist, welche mit einer an der Zugstange befestigten Mutter in Eingriff steht und mit einem Ende an dem zweiten Anschlagkörper angebracht ist. Ein einfaches Drehen der Verstellspindel mittels des Verstellmotors führt somit zu einer Änderung des Arbeitsvolumens der Portioniervorrichtung. Diese einfache mechanische Lösung weist den Vorteil auf, daß sie einfach aufgebaut, nicht störungsanfällig und leicht zu reinigen ist. Ein sehr kompakter, einfacher Aufbau der Verstellmittel wird gefördert, wenn der Verstellmotor und die Verstellspindel an einer an dem zweiten Anschlagkörper befestigten Halteplatte gelagert sind.

Es ist günstig, wenn die Portionierkammern direkt angrenzend an die Durchströmöffnungen und zu diesen fluchtend angeordnet sind und im wesentlichen die gleiche Querschnittsfläche wie die Durchströmöffnungen aufweisen; auf diese Weise muß das die Portionierkammern passierende Portioniergut lediglich durch die Trennwand in seiner Förderrichtung umgeleitet werden, maximal mit einer Änderung dieser Richtung um 90°, und wird deshalb nur unwesentlich mechanisch beeinflußt.

Vorteilhaft sind zwei Zugstangen vorgesehen sein, welche horizontal oberhalb bzw. unterhalb des Gehäuses gelagert sind. Das Gehäuse selbst kann somit sehr klein dimensioniert werden, andererseits ist der Führungsmechanismus frei zugänglich, so daß Reinigungs- und War tungsarbeiten in einfacher Weise durchgeführt werden können.

Um auch sehr kompaktes Portioniergut präzise portionieren und schonend verarbeiten zu können, kann es zweckmäßig sein, daß der erste Anschlagkörper mit einem Unterstützungsantrieb zur Bewegung der Portionierkolben verbunden ist. Der Unterstützungsantrieb kann einen Pneumatikzylinder umfassen, welcher direkt mit dem ersten Anschlagkörper verbunden ist.

In einer bevorzugten Ausführung umfassen die Verstellmittel zum oszillierenden Drehen des Verteilerrohres ein an dem Verteilerrohr angebrachtes Zahnrad und eine mit diesem kämmende, mittels eines Stellzylinders verschiebbare Zahnstange und sind auf diese Weise mechanisch sehr einfach aufgebaut, mit einem hohen Maß an Betrebssicherheit und leicht u reinigen. Der Stellzylinder kann hydraulisch oder pneumatisch betätigt werden.

Der Einlaufbereich des Verteilerrohres kann mittels einer an dem Gehäuse gelagerten Befestigungsvorrichtung, etwa einem Schnellspannverschluß, lösbar mit einem Trichter eines Füllzylinders, der Auslaufbereich der Verteilerrohres mittels einer auf das Gehäuse aufschraubbaren Mutter, beispielsweise einer Überwurfmutter, mit einem Füllrohr verbindbar sein.

Im folgenden wird die Erfindung an Hand eines Ausführungsbeispieles in Verbindung mit der Zeichnung beschrieben. Da bei zeigt:
Fig. 1 eine schematische Vorderansicht, im Schnitt, der erfindungsgemäßen Portioniervorrichtung,
Fig. 2 eine Schnittansicht entlang der Linie A-B von Fig. 1, wobei die linke Portionierkammer gefüllt und die rechte Portionierkammer entleert ist,
Fig. 3 eine Schnittansicht wie Fig. 2, wobei jedoch die rechte Portionierkammer gefüllt und die linke Portionierkammer entleert ist,
Fig. 4 eine Schnittansicht entlang der Linie C-D von Fig. 1,
Fig. 5 eine vergrößerte Detailansicht des in Fig. 3 gezeigten Betriebszustandes und

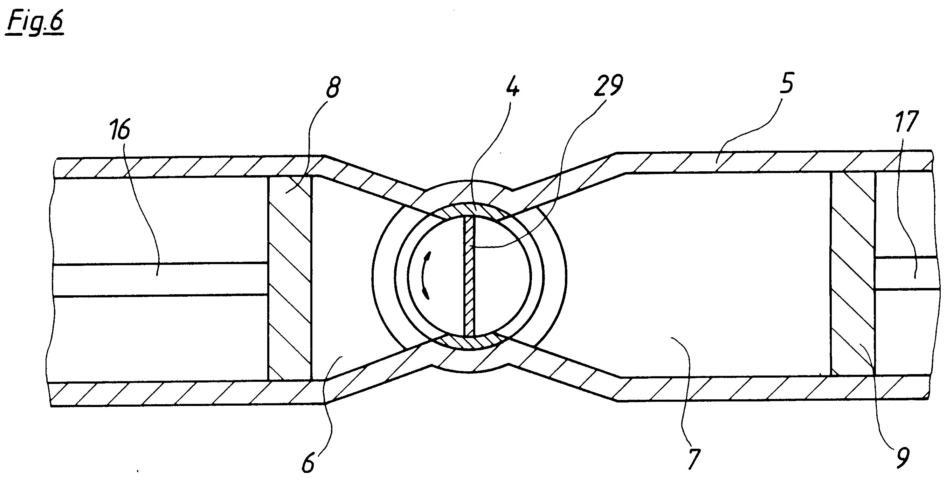

Fig. 6 eine vergrößerte Schnittansicht, ähnlich Fig. 1, in welcher alternativ zur Fig. 1 der in den Fig. 3 und 5 gezeigte Betriebszustand dargestellt ist.

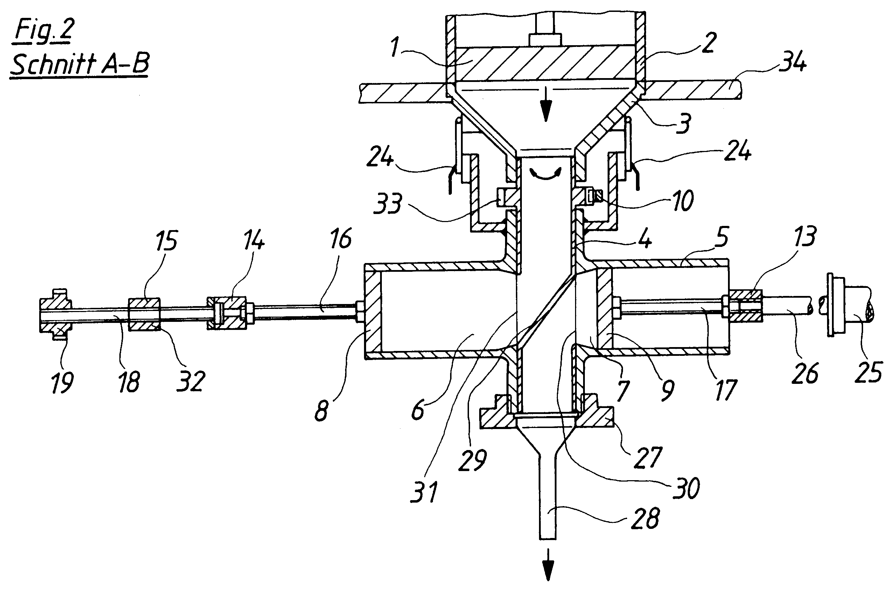

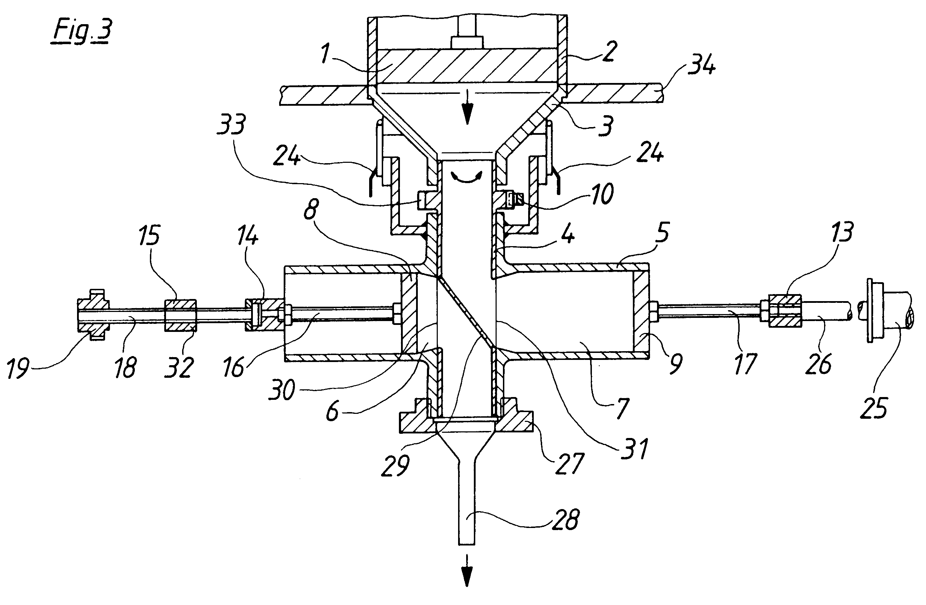

Wie aus den Fig. 2 und 3 ersichtlich ist, ist die erfindungsgemäße Portioniervorrichtung mittels einer lösbaren Befestigungsvorrichtung 24 an einen Trichter 3 einer Füllanlage anschließbar. Der Trichter 3 ist mit einem Gehäuse 34 der Füllanlage verbunden, in welchem ein Füllzylinder 2 angeordnet ist, welcher mittels eines Füllkolbens 1 entleerbar ist. Das Wurstmaterial wird in bekannter Weise, beispielsweise mittels einer Vakuum-Füllanlage vorportioniert in den Füllzylinder 2 eingeführt.

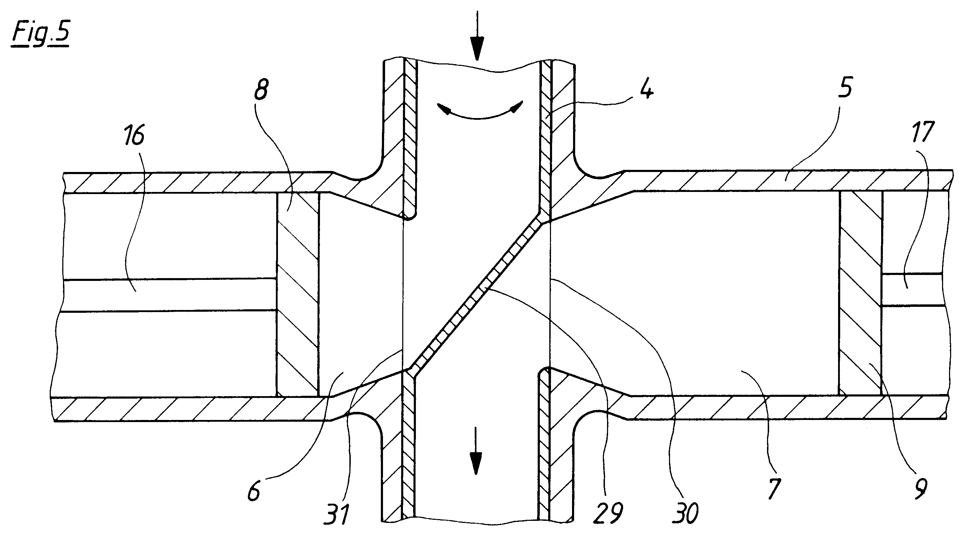

Die erfindungsgemäße Portioniervorrichtung weist ein Gehäuse 5 auf, in welchem drehbar ein Verteilerrohr 4 gelagert ist. Das Verteilerrohr 4 ist in seinem mittleren Bereich mit einer Trennwand 29 versehen, welche sich in einem Winkel von ca. 30 Grad zur Längsachse des Verteilerrohres 4 erstreckt. Benachbart zu der Trennwand 29 weist das Verteilerrohr 4 Durchströmöffnungen 30, 31 auf, so daß das mittels des Füllkolbens 1 eingebrachte Material durch die Trennwand 29 umgeleitet und durch die Durchströmöffnung 31 ausgegeben werden kann, so wie dies in Fig. 3 gezeigt ist. Die Durchströmöffnung 30 dient dazu, das Wurstmaterial in noch zu beschreibender Weise wieder in das Verteilerrohr 4 einzuführen und durch dieses auszuleiten, so wie dies insbesondere aus Fig. 5 ersichtlich ist.

Das Gehäuse 5 umfaßt seitliche Ansätze, welche Portionierkammern 6 bzw. 7 bilden, welche zylindrisch ausgestaltet sind und sich im rechten Winkel zur Längsachse des Verteilerrohres 4 erstrecken. Die Portionierkammern 6 und 7 sind in ihrem Durchmesser, wie insbesondere in Fig. 5 dargestellt, so dimensioniert, daß sie zu dem Durchmesser der Durchströmöffnung 30, 31 passen. Hierdurch ist es möglich, das Wurstmaterial durch das Verteilerrohr 4 und die Durchströmöffnung 31 in die jeweilige Portionierkammer 6 oder 7 einzuführen bzw. das Wurstmaterial durch die Durchströmöffnung 30 in das Verteilerrohr 4 zurückzuleiten.

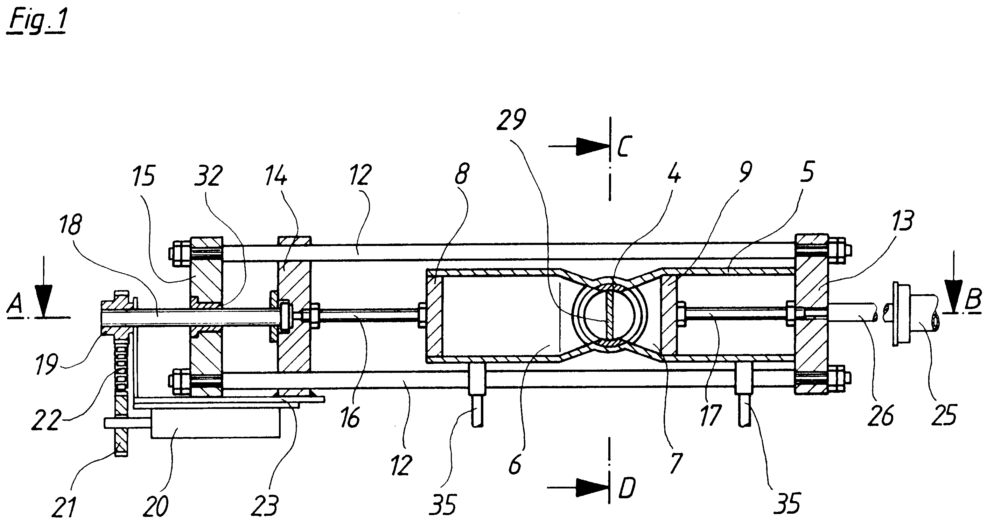

In jeder der Portionierkammern 6, 7 ist ein Portionierkolben 8 bzw. 9 angeordnet, welcher längs der Portionierkammer 6 bzw. 7 verschiebbar ist. Die Portionierkolben 8, 9 sind jeweils mit einer Kolbenstange 16, 17 verbunden. Die Kolbenstangen 16, 17 enden, wie beispielsweise in den Fig. 1 bis 3 dargestellt, jeweils an einem ersten Anschlagkörper 13 (Kolbenstange 17) bzw. einem zweiten Anschlagkörper 14 (Kolbenstange 16). Die Kolbenstangen sind mit den Kolben bzw. Anschlagkörpern verschraubt. Die Anschlagkörper 13 und 14 begrenzen den jeweiligen Kolbenhub. Der erste Anschlagkörper 13 ist mit zwei Zugstangen 12 verbunden, welche mit dem Anschlagkörper 13 verschraubt sind. Die beiden Zugstangen 12 erstrecken sich in horizontaler Richtung oberhalb bzw. unterhalb des Gehäuses 5, die untere Zugstange 12 ist in Gleitschuhen 35 (Fig. 1) so geführt, daß die Zugstangen 12 zusammen mit den Kolben 8, 9 verschiebbar sind.

Wie in Fig. 1 dargestellt, ist der jeweilige linke Endbereich der Zugstange 12 mit einem Lagerelement 15 verbunden, während der zweite Anschlagkörper 14 verschiebbar an den Zugstangen 12 gelagert ist. Das Lagerelement 15 weist eine zentrische Mutter 32 auf, in welcher drehbar eine Verstellspindel 18 geführt ist. Das Außengewinde der Verstellspindel 18 kämmt mit dem Innengewinde der Mutter 32. An dem zweiten Anschlagkörper 14 ist eine Halteplatte 23 befestigt, welche einen Verstellmotor 20 trägt. Auf der Abtriebswelle des Verstellmotors 20 ist ein Ritzel 21 befestigt, welches über eine Kette 22 mit einem Kettenrad 19 verbunden ist. Das Kettenrad 19 ist verdrehfest auf der Verstellspindel 18 gelagert. Das andere Ende der Verstellspindel 18 ist drehbar, jedoch axial fest an dem zweiten Anschlagkörper 14 gelagert, so wie dies in Fig. 1 dargestellt ist.

An dem ersten Anschlagkörper 13 ist weiterhin eine Kolbenstange 26 befestigt, welche mit einem Unterstützungszylinder 25 verbunden ist. Dieser dient zum Unterstützen des Füll- bzw. Ausstoßvorganges der Portionierkammern 6, 7, um die Taktleistung der Portioniervorrichtung zu erhöhen. Weiterhin ermöglicht der Unterstützungszylinder ein Verfahren der Portionierkolben 8, 9 in die jeweilige Endstellung, um die Portioniervorrichtung reinigen zu können.

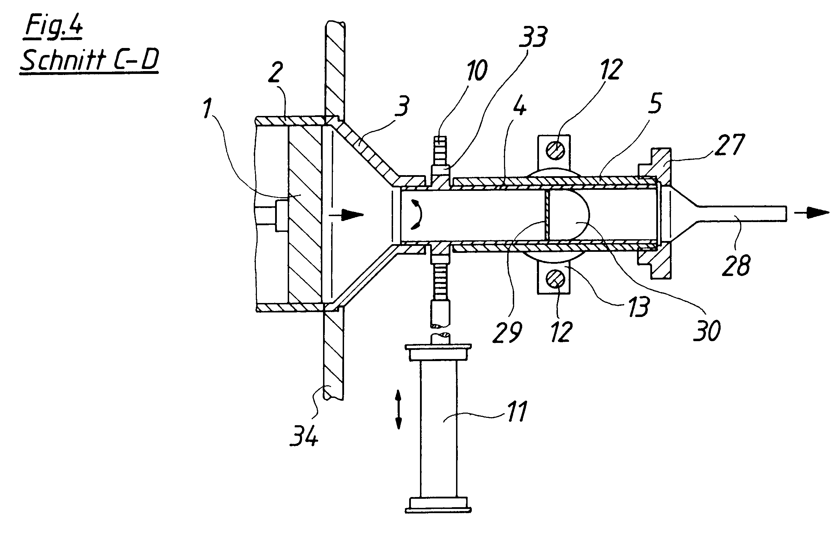

An dem einlaufseitigen Ende ist an dem Verteilerrohr 4 ein Zahnrad 33 ausgebildet, welches mit einer Zahnstange 10 kämmt. Diese ist längsverschiebbar an dem Gehäuse 5 gelagert und kann mittels eines Stellzylinders 11 (siehe Fig. 4) in Längsrichtung verschoben werden, um das Verteilerrohr 4 jeweils um 180 Grad zu drehen.

Im folgenden wird die Arbeitsweise der erfindungsgemäßen Portioniervorrichtung beschrieben:
Nachdem das Gehäuse 5 mittels der Befestigungsvorrichtung 24 an dem Trichter 3 befestigt wurde, erfolgt durch Betätigung des Stellzylinders 11 unter Verschieben der Zahnstange 10 eine Drehung des Verteilerrohres 4 in eine der beiden Betriebsstellungen. Ausgehend von dem in Fig. 1 gezeigten Betriebszustand, bei welchem sich der Portionierkolben 8 in einer rückgezogenen Position befindet, welche auch in Fig. 2 gezeigt ist, wird mittels des Füllkolbens 1 Wurstmaterial durch das Verteilerrohr 4 unter Umlenkung durch die Trennwand 29 durch die Durchströmöffnung 31 in die Portionierkammer 6 eingefüllt. Die Fig. 1 und 2 zeigen jeweils den fertig gefüllten Zustand, es versteht sich für den Fachmann, daß die nicht dargestellte Wurstmasse den Portionierkolben 8 aus der in Fig. 5 gezeigten Ausgangsstellung in die in den Fig. 1 und 2 gezeigte Füllstellung verschiebt. Nach vollständiger Füllung der Portionierkammer 6 wird der Stellzylinder 11 betätigt, um über die Zahnstange 10 das Verteilerrohr 4 um 180 Grad zu drehen, so daß die Trennwand 29 die in Fig. 3 gezeigte Stellung einnimmt. Durch Einpressen des Wurstmaterials mittels des Füllkolbens 1 ist es somit möglich, den Portionierkolben 9 nach rechts zu verschieben. Da die beiden Kolben 8, 9 über die Zugstangen 12 miteinander verbunden sind, erfolgt bei einer Verschiebung des Portionierkolbens 9 nach rechts gleichzeitig ein Verschieben des Portionierkolbens 8 nach rechts, so daß das in der Portionierkammer 6 befindliche Wurstmaterial unter Umlenkung durch die Trennwand 29 durch die Durchströmöffnung 30 ausgleitet und einem Füllrohr 28 zugeführt wird, welches mittels einer Mutter 27 an dem Gehäuse 5 befestigt ist.

Es erfolgt somit ein wechselseitiges Entleeren bzw. Befüllen der Portionierkammern 6, 7 durch gesteuertes Verschieben der Portionierkolben 8, 9. Zu Beginn bzw. zu Ende des gesamten Füllvorganges können die Portionierkolben 8, 9 mittels des Unterstützungszylinders 25 gezielt bewegt werden, der Unterstützungszylinder 25 kann auch während des normalen Betriebes in Übereinstimmung mit der Betätigung des Stellzylinders 11 und der Betätigung des Füllkolbens 1 in Betrieb genommen werden.

Eine Anpassung des jeweils zu portionierenden Volumens erfolgt durch Betätigung des Verstellmotors 20. Die hierdurch erfolgende Drehung der Verstellspindel 18 führt dazu, daß der Abstand des zweiten Anschlagkörpers 14 zu dem Lagerelement 15 vergrößert oder verkleinert wird. Mit der Verschiebung des zweiten Anschlagkörpers 14 relativ zu den Zugstangen 12 erfolgt auch eine Verschiebung des Portionierkolbens 8, so daß sich der Abstand der Portionierkolben 8 und 9 ändert. Je näher diese zueinander liegen, desto geringer ist das jeweilige Füllvolumen.

## Patentansprüche

1. Portioniervorrichtung, insbesondere für eine Wurstfüllmaschine, mit einem drehbar gelagerten Verteilerrohr (4), welches in seinem mittleren Bereich mit einer schräg zu der Längsachse des Verteilerrohres (4) angeordneten Trennwand (29) versehen ist, mit beiderseits der Trennwand (29) jeweils einer Durchströmöffnung (30,31) in der Wandung des Verteilerrohres (4), welche gegenüberliegend zu der Trennwand (29) angeordnet ist und jeweils in eine von zwei senkrecht zu der Längsachse des Verteilerrohres (4) in einem das Verteilerrohr (4) aufnehmenden Gehäuse (5) angeordneten Portionierkammern (6,7) mündet, mit jeweils einem in der jeweiligen Portionierkammer (6,7) gelagerten Portionierkolben (8,9), mit Antriebsmitteln zum gleichzeitigen Bewegen der Portionierkolben (8,9) und mit Verstellmitteln zum oszillierenden Drehen des Verteilerrohres (4), wobei die Antriebsmittel zum synchronen Bewegen der Portionierkolben (8,9) zumindest eine außerhalb der Portionierkammern (6,7) angeordnete, die beiden Portionierkolben (8,9) verbindende Zugstange (12) und Mittel zur Hubeinstellung der Portionierkolben (8,9) umfassen, wobei die Portionierkammer (6,7) direkt angrenzend an die Durchströmöffnung (30,31) und zu dieser fluchtend angeordnet ist,
dadurch gekennzeichnet, daß
die Mittel zur Hubeinstellung einen an einem Endbereich der Zugstange (12) an dieser befestigten ersten Anschlagkörper (13) und einen an dem anderen Endbereich der Zugstange (12) an dieser verstellbar gelagerten, mittels eines Verstellmotors (20) längs der Zugstange (12) verschiebbaren zweiten Anschlagkörper (14) aufweisen und die Anschlagkörper (13,14) mit jeweils einem der Portionierkolben (8,9) mit Hilfe einer Kolbenstange (16,17) verbunden sind, daß das Verteilerrohr (4) um jeweils 180° drehbar ist und daß die Portionierkammer (6,7) im wesentlichen die gleiche Querschnittsfläche wie die Durchströmöffnung (30,31) aufweist.

2. Portioniervorrichtung nach Anspruch 1, dadurch gekennzeichnet, daß der Verstellmotor (20) an der Zugstange (12) längsverschiebbar gelagert und mit einer Verstellspindel (18) betriebsverbunden ist, welche mit einer an der Zugstange (12) befestigten Mutter (32) in Eingriff steht und mit einem Ende an dem zweiten Anschlagkörper (14) angebracht ist.

3. Portioniervorrichtung nach Anspruch 2, dadurch gekennzeichnet, daß der Verstellmotor (20) und die Verstellspindel (18) an einer an dem zweiten Anschlagkörper (14) befestigten Halteplatte (23) gelagert sind.

4. Portioniervorrichtung nach einem der Ansprüche 1 bis 3, dadurch gekennzeichnet, daß die Portionierkammern (6,7) direkt angrenzend an die Durchströmöffnungen (30,31) und zu diesen fluchtend angeordnet sind und im wesentlichen die gleiche Querschnittsfläche wie die Durchströmöffnungen (30,31) aufweisen.

5. Portioniervorrichtung nach einem der Ansprüche 1 bis 4, dadurch gekennzeichnet, daß zwei Zugstangen (12) vorgesehen sind, welche horizontal oberhalb bzw. unterhalb des Gehäuses (5) gelagert sind.

6. Portioniervorrichtung nach einem der Ansprüche 1 bis 5, dadurch gekennzeichnet, daß der erste Anschlagkörper (13) mit einem Unterstützungsantrieb (25,26) zur Bewegung der Portionierkolben (8,9) verbunden ist.

7. Portioniervorrichtung nach einem der Ansprüche 1 bis 6, dadurch gekennzeichnet, daß die Verstellmittel zum oszillierenden Drehen des Verteilerrohres (4) ein an dem Verteilerrohr (4) angebrachtes Zahnrad (33) und eine mit diesem kämmende, mittels eines Stellzylinders (11) verschiebbare Zahnstange (10) umfassen.

8. Portioniervorrichtung nach einem der Ansprüche 1 bis 7, dadurch gekennzeichnet, daß der Einlaufbereich des Verteilerrohres (4) mittels einer an dem Gehäuse (5) gelagerten Befestigungsvorrichtung (24) lösbar mit einem Trichter (3) eines Füllzylinders (2) verbindbar ist.

9. Portioniervorrichtung nach einem der Ansprüche 1 bis 8, dadurch gekennzeichnet, daß der Auslaufbereich des Verteilerrohres (4) mittels einer auf das Gehäuse (5) aufschraubbaren Mutter (27) mit einem Füllrohr (28) verbindbar ist.

## Claims

1. A portioning device, in particular for a sausage filling machine, having a rotatably mounted distributing pipe (4) provided in its central region with a dividing wall (29) arranged at an angle to the longitudinal axis of the distributing pipe (4), having through-flow openings (30, 31) arranged in the wall of the distributing pipe (4) one at either side of the dividing wall (29), which through-flow openings (30, 31) are arranged opposite the dividing wall (29) and each issue into one of two portioning chambers (6, 7) which, perpendicular to the longitudinal axis of the distributing pipe (4), are arranged in a housing (5) receiving the distributing pipe (4), having in each case a portioning plunger (8, 9) mounted in the respective portioning chamber (6, 7), having drive means for simultaneous movement of the portioning plungers (8, 9), and having adjustment means for oscillating rotation of the distributing pipe (4), the drive means for synchronous movement of the portioning plungers (8, 9) comprising at least one tie rod (12) which is arranged outside of the portioning chambers (6, 7) and connects the two portioning plungers (8, 9) and comprising means for adjusting the stroke of the portioning plungers (8, 9), the portioning chamber (6, 7) being arranged directly adjacent to the through-flow opening (30, 31) and in alignment therewith, characterised in that the means for stroke adjustment have a first stop body (13) secured to one end region of the tie rod (12) and a second stop body (14) adjustably mounted at the other end region of the tie rod (12) and displaceable along the tie rod (12) by means of an adjusting motor (20) and the stop bodies (13, 14) are each connected to one of the portioning plungers (8, 9) with the aid of a piston rod (16, 17), in that the distributing pipe (4) is each time rotatable through 180°, and in that the portioning chamber (6, 7) has substantially the same cross-sectional area as the through-flow opening (30, 31).

2. A portioning device in accordance with Claim 1, characterised in that the adjusting motor (20) is mounted on the tie rod (12) so as to be longitudinally displaceable and is operatively connected to an adjusting spindle (18), which adjusting spindle (18) engages with a nut (32) secured to the tie rod (12) and is fastened by means of one end to the second stop body (14).

3. A portioning device in accordance with Claim 2, characterised in that the adjusting motor (20) and the adjusting spindle (18) are mounted on a holding plate (23) secured to the second stop body (14).

4. A portioning device in accordance with any one of Claims 1 to 3, characterised in that the portioning chambers (6, 7) are arranged directly adjacent to the through-flow openings (30, 31) and in alignment therewith and have substantially the same cross-sectional area as the through-flow openings (30, 31).

5. A portioning device in accordance with any one of Claims 1 to 4, characterised in that there are provided two tie rods (12) which are mounted horizontally above and below the housing (5) respectively.

6. A portioning device in accordance with any one of Claims 1 to 5, characterised in that the first stop body (13) is connected to a booster drive (25, 26) for movement of the portioning plungers (8, 9).

7. A portioning device in accordance with any one of Claims 1 to 6, characterised in that the adjusting means for oscillating rotation of the distributing pipe (4) comprise both a toothed wheel (33) attached to the distributing pipe (4) and a rack (10) engaging with the toothed wheel (33) and displaceable by means of an adjusting cylinder (11).

8. A portioning device in accordance with any one of Claims 1 to 7, characterised in that the inlet region of the distributing pipe (4) is detachably connectable to a funnel (3) of a filling cylinder (2) by means of a securing device (24) mounted on the housing (5).

9. A portioning device in accordance with any one of Claims 1 to 8, characterised in that the outlet region of the distributing pipe (4) is connectable to a filling pipe (28) by means of a nut (27) which can be screwed onto the housing (5).

## Revendications

1. Appareil doseur, notamment pour une machine de remplissage de saucisse, comportant :
un tube distributeur (4) monté de façon pivotante, lequel est pourvu dans sa zone médiane d'une paroi de séparation (29) disposée à l'oblique de l'axe longitudinal du tube distributeur (4), ce dernier tube présentant de chacun des deux côtés de la paroi de séparation (29) une ouverture de passage (30, 31) pratiquée dans sa paroi, disposée en face de la paroi de séparation (29) et débouchant à chaque fois dans l'une de deux chambres de dosage (6, 7) disposées perpendiculairement à l'axe longitudinal du tube distributeur (4) dans un boîtier (5) qui reçoit le tube distributeur (4),
un piston doseur (8, 9) étant logé chaque fois dans la chambre de dosage respective (6, 7),
des moyens d'entraînement pour le déplacement simultané des pistons doseurs (8, 9)
et des moyens de commande pour un pivotement alternatif du tube distributeur (4),
les moyens d'entraînement pour le déplacement synchrone des pistons doseurs (8, 9), comprenant au moins une barre de traction (12), disposée à l'extérieur de la chambre de dosage (6, 7) et reliant les deux pistons doseurs (8, 9), et des moyens de réglage de la course des pistons doseurs (8, 9),
la chambre de dosage (6, 7) étant disposée directement adjacente à l'ouverture de passage (30, 31) et en affleurement avec celle-ci,
caractérisé en ce que les moyens pour le réglage de la course comprennent une première pièce d'arrêt (13) fixée à la barre de traction (12) au niveau d'une zone d'extrémité de celle-ci, et une deuxième pièce d'arrêt (14) montés sur la barre de traction (12), de façon mobile, au niveau de l'autre zone d'extrémité de celle-ci, et pouvant être déplacés le long de la barre de traction (12) à l'aide d'un servo-moteur (20),
en ce que les pièces d'arrêt (13, 14) sont reliées à chaque fois à l'un des pistons doseurs (8, 9) à l'aide d'une tige de piston (16, 17),
en ce que le tube distributeur (4) peut pivoter chaque fois de 180°
et en ce que la chambre de dosage (6, 7) présente essentiellement la même surface en coupe transversale que l'ouverture de passage (30, 31).

2. Dispositif doseur selon la revendication 1, caractérisé en ce que le servo-moteur (20) est monté en pouvant se déplacer longitudinalement sur la barre de traction (12) et est en relation fonctionnelle avec une vis de réglage (18), laquelle est en prise avec un écrou (32) fixé à la barre de traction (12) et est montée par une extrémité sur la deuxième pièce d'arrêt (14).

3. Dispositif doseur selon la revendication 2, caractérisé en ce que le servo-moteur (20) et la tige de réglage (18) sont montés sur une plaque de support (23) fixée sur la deuxième pièce d'arrêt (14).

4. Dispositif doseur selon l'une des revendications 1 à 3, caractérisé en ce que les chambres de dosage (6, 7) sont disposées directement adjacentes aux ouvertures de passage (30, 31) et en affleurement de celles-ci et présentent essentiellement la même section que les ouvertures de passage (30, 31).

5. Dispositif doseur selon l'une des revendications 1 à 4, caractérisé en ce que deux barres de traction (12) sont prévues, lesquelles sont logées à l'horizontale au-dessus ou au-dessous du boîtier (5).

6. Dispositif doseur selon l'une des revendications 1 à 5, caractérisé en ce que la première pièce d'arrêt (13) est reliée à un moyen d'entraînement supplémentaire (25, 26) pour le déplacement des pistons doseurs (8, 9).

7. Dispositif doseur selon l'une des revendications 1 à 6, caractérisé en ce que les moyens de réglage destinés au pivotement alternatif oscillatoire du tube distributeur (4) comprennent une roue dentée (33) montée sur le tube distributeur (4) et une crémaillère (10) engrenant avec celle-ci, ajustable à l'aide d'un vérin de réglage (11).

8. Dispositif doseur selon l'une des revendications 1 à 7, caractérisé en ce que la zone d'entrée du tube distributeur (4) peut être reliée de façon démontable à une trémie (3) d'un cylindre de remplissage (2) à l'aide d'un dispositif de fixation (24) monté sur le boîtier (5).

9. Dispositif doseur selon l'une des revendications 1 à 8, caractérisé en ce que la zone de sortie du tube distributeur (4) peut être reliée à un tuyau de remplissage (28) à l'aide d'un écrou (27) qui peut être vissé sur le boîtier (5).
